(19) Europäisches Patentamt
European Patent Office
Office européen des brevets

(11) EP 2 832 427 A1

(12) EUROPEAN PATENT APPLICATION
published in accordance with Art. 153(4) EPC

(43) Date of publication:
04.02.2015 Bulletin 2015/06

(51) Int Cl.:
B01D 71/02 (2006.01)   B01D 69/04 (2006.01)
B01D 69/12 (2006.01)   C01B 31/02 (2006.01)

(21) Application number: 13767942.9

(22) Date of filing: 04.02.2013

(86) International application number:
PCT/JP2013/052483

(87) International publication number:
WO 2013/145863 (03.10.2013 Gazette 2013/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 30.03.2012 JP 2012082175

(71) Applicant: NGK Insulators, Ltd.
Nagoya-shi, Aichi 467-8530 (JP)

(72) Inventors:
• ICHIKAWA, Akimasa
Nagoya-shi
Aichi 467-8530 (JP)
• FUJISAKI, Shinji
Nagoya-shi
Aichi 467-8530 (JP)

(74) Representative: TBK
Bavariaring 4-6
80336 München (DE)

(54) **CARBON FILM, METHOD FOR MANUFACTURING CARBON FILM, AND CARBON FILM FILTER**

(57) There is disclosed a method for manufacturing a carbon membrane in which a phenolic hydroxyl group is 10,000 ppm or less and whose separating function does not easily deteriorate even after exposure to acidic conditions. The method for manufacturing the carbon membrane has a drying step of drying a resin solution membrane including a phenol resin formed on a substrate; and a carbon membrane preparing step of heating the dried resin solution membrane at 600 to 900°C in a vacuum or at 650 to 900°C in a nitrogen atmosphere to carbonize the membrane, thereby obtaining the carbon membrane in which the concentration of the phenolic hydroxyl group is 10,000 ppm or less.

FIG.1

## Description

Technical Field

The present invention relates to a carbon membrane, a method for manufacturing the carbon membrane, and a carbon membrane filter. More particularly, it relates to a carbon membrane whose separating function does not easily deteriorate even after exposure to acidic conditions, a method for manufacturing the carbon membrane, and a carbon membrane filter.

Background Art

Heretofore, a carbon membrane including carbon as a main component has been used to separate a specific component (i.e., a separation object component) from a mixture (e.g., a mixed gas or a mixed liquid) including the specific component.

As such a carbon membrane, for example, a carbon membrane has been disclosed in which a carbon content ratio is 80% or more and a plurality of pores having pore diameters of 1 nm or less are formed (Patent Document 1). Furthermore, a carbon membrane has been disclosed in which a carbon content ratio is 80% or more and a plurality of pores having pore diameters of 0.3 to 4 nm are formed and which has a maximum value of a pore diameter distribution in a region of 0.6 to 2.0 nm (Patent Document 2). Furthermore, there has been disclosed a porous carbon membrane having water and an alcohol loaded onto the surface thereof (Patent Document 3).

However, the carbon membranes described in Patent Documents 1 to 3 have the problem that when each membrane is exposed to acidic conditions, the membrane is deteriorated by an action of an acid and a selectivity deteriorates. As a carbon membrane to solve such a problem, there has been disclosed a carbon membrane obtained by carbonizing "a phenol resin in which a molar content ratio of a total of at least one group of atoms selected from the group consisting of a methylene bond and the like is from 100 to 180% to a phenol nucleus" (Patent Document 4).

Citation List

Patent Documents

[Patent Document 1] JP 3647985
[Patent Document 2] JP-A-2000-237562
[Patent Document 3] WO 2009/150903
[Patent Document 4] WO 2011/118469

Summary of the Invention

Problem to be Solved by the Invention

However, even in a carbon membrane described in Patent Document 4, deterioration of a separating function under acidic conditions cannot sufficiently be inhibited. That is, even the carbon membrane described in Patent Document 4 has the problem that when the membrane is exposed to the acidic conditions, a selectivity deteriorates. For example, there has been the problem that when water is separated from a mixed liquid of an organic solvent such as ethanol and the water and when the carbon membrane is exposed to the acidic conditions, the carbon membrane is deteriorated by an action of an acid, and an amount of the organic solvent which permeates the carbon membrane disadvantageously increases. Consequently, there has earnestly been desired development of the carbon membrane whose separating function does not easily deteriorate even after the exposure to the acidic conditions.

The present invention has been developed in view of such problems of the conventional technology. An object of the invention is to provide a carbon membrane whose separating function does not easily deteriorate even after exposure to acidic conditions, a method for manufacturing the carbon membrane, and a carbon membrane filter. Means for Solving the Problem

According to the present invention, there are provided a carbon membrane, a method for manufacturing the carbon membrane, and a carbon membrane filter described in the following.

[1] A carbon membrane in which a phenolic hydroxyl group is 10,000 ppm or less.
[2] The carbon membrane according to the above [1], wherein a membrane thickness is from 0.1 to 5 $\mu$m.

[3] A method for manufacturing a carbon membrane, including a drying step of drying a resin solution membrane including a phenol resin formed on a substrate; and a carbon membrane preparing step of heating the dried resin solution membrane at 600 to 900°C in a vacuum or at 650 to 900°C in a nitrogen atmosphere to carbonize the membrane, thereby obtaining the carbon membrane in which a phenolic hydroxyl group is 10,000 ppm or less.

[4] The method for manufacturing the carbon membrane according to the above [3], wherein the drying step is a step of drying the resin solution membrane at a temperature of 200 to 350°C in the air atmosphere.

[5] The method for manufacturing the carbon membrane according to the above [3] or [4], wherein the substrate is a tubular porous substrate in which there are formed a plurality of cells which become through channels for a fluid and extend from one end face to the other end face, and the drying step is a step of drying the resin solution membrane formed on each of the surfaces of the cells of the porous substrate.

[6] A carbon membrane filter comprising a tubular porous substrate in which there are formed a plurality of cells which become through channels for a fluid and extend from one end face to the other end face; and the carbon membrane according to the above [1] or [2], which is formed on each of the surfaces of the cells formed on the porous substrate.

Effect of the Invention

In a carbon membrane of the present invention, "a phenolic hydroxyl group is 10,000 ppm or less". That is, the carbon membrane of the present invention is controlled so that the phenolic hydroxyl group present in the carbon membrane has a predetermined concentration or less. Therefore, in the carbon membrane of the present invention, deterioration of a separating function does not easily occur even after exposure to acidic conditions.

In a method for manufacturing the carbon membrane of the present invention, "a dried resin solution membrane is heated at 600 to 900°C in a vacuum or a nitrogen atmosphere" to carbonize the membrane. The resin solution membrane is carbonized on such conditions, so that it is possible to prepare the carbon membrane in which the phenolic hydroxyl group is 10,000 ppm or less. In this carbon membrane, the deterioration of the separating function does not easily occur even after the exposure to the acidic conditions.

A carbon membrane filter of the present invention includes the carbon membrane of the present invention, i.e., "the carbon membrane in which the phenolic hydroxyl group is 10,000 ppm or less". Therefore, in the carbon membrane filter of the present invention, the deterioration of the separating function does not easily occur even after the exposure to the acidic conditions.

Brief Description of the Drawings

Fig. 1 is a perspective view schematically showing one embodiment of a carbon membrane filter of the present invention; and

Fig. 2 is a plan view schematically showing an enlarged region P of a part of an end face of the carbon membrane filter shown in Fig. 1.

Mode for Carrying out the Invention

Hereinafter, an embodiment of the present invention will be described with reference to the drawings. It should be understood that the present invention is not limited to the following embodiment and that the following embodiment to which change, improvement or the like is suitably added on the basis of ordinary knowledge of a person skilled in the art without departing from the gist of the present invention also falls in the scope of the present invention.

[1] Carbon Membrane:

In a carbon membrane of the present invention is a carbon membrane in which a phenolic hydroxyl group is 10,000 ppm or less. That is, the carbon membrane of the present invention is controlled so that the phenolic hydroxyl group present in the carbon membrane has a predetermined concentration or less. Therefore, in the carbon membrane of the present invention, deterioration of a separating function does not easily deteriorate even after exposure to acidic conditions. That is, the carbon membrane of the present invention selectively allows permeation of a desired specific component even after the exposure to the acidic conditions, and does not easily allow the permeation of a component other than the specific component.

As described above, in the carbon membrane of the present invention, the phenolic hydroxyl group is 10,000 ppm or less, and the phenolic hydroxyl group is preferably 5,000 ppm or less and further preferably 1,000 ppm or less.

When the phenolic hydroxyl group is in excess of 10,000 ppm, the separating function after the exposure to the acidic conditions disadvantageously deteriorates.

Here, in the present description, the concentration of the phenolic hydroxyl group in the carbon membrane is a value calculated by a method of Boehm et al. (reference document: Carbon, 40, p. 145 to 149, 2002). Specifically, by the method of Boehm et al., amounts of a carboxyl group, a lactone group and the phenolic hydroxyl group present in the surface of the carbon membrane are determined quantitatively, to calculate the concentration (ppm) of the phenolic hydroxyl group in the carbon membrane. More specifically, a part of the carbon membrane is shaved off, and carbon membrane powder is sampled. This carbon membrane powder is added by the same amount to an aqueous solution of 0.1 mol/L of $NaHCO_3$, an aqueous solution of 0.1 mol/L of $Na_2HCO_3$, and an aqueous solution of 0.1 mol/L of NaOH, respectively, and shaken at 25°C for four days. Afterward, a supernatant liquid of each aqueous solution is sampled, and each supernatant liquid is neutralized and titrated with 0.1 mol/L of HCl. It is considered that $NaHCO_3$ causes a neutralizing reaction only with the carboxyl group, $Na_2HCO_3$ causes a neutralizing reaction with the carboxyl group and the lactone group, and NaOH causes a neutralizing reaction with all of the above three types of functional groups. Therefore, a change of the concentration of each of the above functional groups in these aqueous solutions before and after the addition of the carbon membrane powder is obtained by the neutralization titration, to calculate an amount of each functional group in each aqueous solution. It is to be noted that when the carbon membrane powder is shaved off from "a carbon membrane filter including a substrate and the carbon membrane formed on this substrate", a component (e.g., ceramic) constituting the substrate is disadvantageously mixed into the carbon membrane powder. Therefore, "an actual mass of the carbon membrane (a mass obtained by subtracting a mass of the above 'ceramic constituting the substrate' which is mixed into the carbon membrane powder)" is obtained from a difference between the mass before a heat treatment of this carbon membrane powder at 1000°C in the air and the mass after the above heat treatment. The concentration of the phenolic hydroxyl group in the carbon membrane is calculated from the amount of the phenolic hydroxyl group in the carbon membrane powder which is calculated by the above method and the mass of the carbon membrane (the actual mass of the carbon membrane).

A membrane thickness of the carbon membrane of the present invention is preferably from 0.1 to 5 µm. An upper limit value of the membrane thickness of the carbon membrane is further preferably 1 µm and especially preferably 0.5 µm. When the membrane thickness of the carbon membrane is in the above range, a resistance of the carbon membrane decreases, so that there is the advantage that a permeation amount increases. When the membrane thickness of the carbon membrane is smaller than a lower limit value, there is the fear that a selectivity deteriorates. On the other hand, when the membrane thickness is in excess of the upper limit value, heat stress of the carbon membrane increases, and hence there is the fear that cracks are generated in the carbon membrane.

The carbon membrane of the present invention includes carbon as a main component. When the carbon membrane "includes carbon as the main component", it is meant that components constituting the carbon membrane include 90 mass% or more of carbon. In the carbon membrane of the present invention, there is not any special restriction on a content ratio of carbon, as long as carbon is the main component. The content ratio of carbon in the carbon membrane is preferably from 90 to 99 mass%. A lower limit value of the content ratio of carbon in the carbon membrane is further preferably 93 mass% and especially preferably 95 mass%. When the content ratio of carbon in the carbon membrane is smaller than 90 mass%, an acid resistance of the carbon membrane deteriorates, and hence there is the fear that a durability deteriorates. It is to be noted that when the content ratio is in excess of 99 mass%, hydrophilic properties of the carbon membrane deteriorate. Therefore, there is the fear that the permeation amount of a hydrophilic separation object component such as water lowers. The content ratio (mass%) of carbon in the carbon membrane is measured by performing CHN element analysis for the powder (the carbon membrane powder) obtained by shaving off a part of the carbon membrane. It is to be noted that when the content ratio (mass%) of carbon in the carbon membrane of "the carbon membrane filter including the substrate and the carbon membrane formed on this substrate" is measured, the component constituting the substrate (e.g., ceramic) is disadvantageously mixed into the carbon membrane powder obtained by shaving off the above carbon membrane sometimes. Therefore, the actual mass of the carbon membrane in this case is a value obtained by subtracting the mass of the above "component constituting the substrate" which is mixed into the carbon membrane powder. Therefore, the actual mass of the carbon membrane is obtained by calculating the difference between the mass before the heat treatment of the carbon membrane powder at 1000°C in the air and the mass after the above heat treatment.

In the carbon membrane of the present invention, a plurality of pores are formed. The plurality of pores are formed in this manner, whereby when a mixture including a specific component (e.g., a mixture of an organic solvent and water) is supplied to the side of one surface of the carbon membrane, the specific component (e.g., the water) in the above mixture only passes through the above pores, and is discharged to the side of the other surface of the carbon membrane. As described above, in the carbon membrane of the present invention, the only specific component can selectively be separated from the mixture including the specific component. An average pore diameter of the carbon membrane of the present invention is preferably from 0.1 to 5 nm. A lower limit value of the average pore diameter of the carbon membrane is further preferably 0.2 nm and especially preferably 0.3 nm. On the other hand, an upper limit value is further preferably 1 nm and especially preferably 0.7 nm. When the average pore diameter of the carbon membrane is smaller than the lower limit value, there is the fear that the permeation amount of the separation object component which permeates the carbon membrane lowers. On the other hand, when the average pore diameter is in excess of the upper limit value, there is the fear that the selectivity of the carbon membrane deteriorates. The average pore diameter of the carbon membrane is a value measured by performing a gas adsorption method for the powder (the carbon membrane powder) obtained by shaving off a part of the carbon membrane.

[2] Method for Manufacturing Carbon Membrane:

A method for manufacturing the carbon membrane of the present invention has a drying step of drying a resin solution membrane including a phenol resin formed on a substrate. Furthermore, the method for manufacturing the carbon membrane of the present invention has a carbon membrane preparing step of heating the dried resin solution membrane (i.e., the resin membrane) at 600 to 900°C in a vacuum or at 650 to 900°C in a nitrogen atmosphere to carbonize the membrane, thereby obtaining the carbon membrane in which a phenolic hydroxyl group is 10,000 ppm or less. As described above, the above resin membrane is heated at a predetermined temperature in the vacuum or the nitrogen atmosphere and carbonized, so that it is possible to manufacture "the carbon membrane in which the phenolic hydroxyl group is 10,000 ppm or less". In the carbon membrane manufactured as described above, the deterioration of the separating function does not easily occur even after the exposure to the acidic conditions.

For heating conditions of the resin membrane, as described above, it is necessary to heat the resin membrane at 600 to 900°C in the vacuum or at 650 to 900°C in the nitrogen atmosphere. The above heating conditions are satisfied, so that it is possible to obtain the carbon membrane in which the phenolic hydroxyl group is 10,000 ppm or less. There is not any special restriction on a heating time of the resin membrane, but the heating time is preferably from one to 20 hours. That is, for the heating conditions of the resin membrane, the membrane is heated in the vacuum preferably at 600 to 900°C for one to 20 hours and further preferably at 700 to 800°C for five to ten hours. On the above heating conditions, control can suitably be executed so that the concentration of the phenolic hydroxyl group is 10,000 ppm or less.

In the method for manufacturing the carbon membrane of the present invention, the drying step is preferably a step of drying the above resin solution membrane at a temperature of 200 to 350°C in the air atmosphere. As described above, when the membrane is dried at a temperature of 200 to 350°C in the air atmosphere, it is possible to obtain the carbon membrane having a further low concentration of the phenolic hydroxyl group (e.g., the phenolic hydroxyl group is 5,000 ppm or less).

As described above, a drying temperature is preferably from 200 to 350°C and further preferably from 200 to 300°C in the air atmosphere. An upper limit value of the drying temperature is especially preferably 250°C. In the above range, there is the advantage that the membrane thickness after the drying becomes uniform. When the drying temperature is lower than 200°C, there is the fear that the dried resin membrane is molten. On the other hand, when the drying temperature is in excess of 350°C, there is the fear that the resin membrane is thermally decomposed during the drying.

A weight-average molecular weight of the phenol resin is preferably from 3,000 to 10,000. A lower limit value of the above weight-average molecular weight is further preferably 4,000. When the weight-average molecular weight is in the above range, it is possible to obtain the carbon membrane having a high selectivity. When the weight-average molecular weight is smaller than 3,000, there is the fear that the resin membrane is molten. On the other hand, when the weight-average molecular weight is in excess of 10,000, there is the fear that a defect is generated in the carbon membrane due to a shrinkage of the carbon membrane during the carbonization. When such a defect is generated, there is the fear that the selectivity of the carbon membrane deteriorates.

As the phenol resin, a commercially available product may be used. Examples of the commercially available product of the phenol resin include trade name "BELLPEARL S899", trade name "BELLPEARL S890" and trade name "BELLPEARL S870" (manufactured by AIR WATER INC.), trade name "SUMILITE RESIN 53056" (manufactured by SUMITOMO BAKELITE CO., LTD.), and trade name "RESITOP PSK2320" and trade name "Marilin HF" (manufactured by GUN EI Chemical Industry).

The membrane thickness of the resin membrane is preferably "such a thickness that the membrane thickness after the carbonization is from 0.1 to 5 $\mu$m", and can be, for example, from 0.2 to 10 $\mu$m.

The substrate is a supporter to support the resin solution membrane. A shape of the substrate can suitably be selected in accordance with a use purpose of the carbon membrane. Examples of the shape of the substrate include a monolithic shape, a honeycomb shape, a circular plate shape, a polygonal plate shape, a tubular shape of a circular tube, a square tube or the like, and a pillar shape of a circular pillar, a square pillar or the like. Among these shapes, the monolithic shape and the honeycomb shape are preferable. This is because a membrane area ratio to a volume or a weight is large. It can be considered that "the monolithic shape" is a shape in which a plurality of cells extending from one end face to the other end face are formed, for example, a lotus root shape.

The substrate is preferably a tubular porous substrate (hereinafter described as "the porous substrate" sometimes) in which there are formed the plurality of cells which become through channels for a fluid and extend from the one end face to the other end face. When the porous substrate is used as the substrate, a strength and the durability of the carbon membrane can be improved. When the porous substrate is used, the resin solution membrane is preferably formed on each of the surfaces of the cells of the porous substrate. In this case, the drying step is the step of drying the resin solution membrane formed on each of the surfaces of the cells of the porous substrate.

There is not any special restriction on the porous substrate, but the porous substrate is preferably made of ceramic. Examples of a material of the porous substrate made of the ceramic include alumina, silica, and cordierite.

The porous substrate may have a tubular porous substrate main body in which there are formed the plurality of cells which become the through channels for the fluid and extend from the one end face to the other end face, and a surface layer formed on each of the surfaces of the above cells of this substrate main body.

An average pore diameter of the surface layer of the porous substrate is preferably from 0.01 to 10 $\mu$m. A lower limit value of the average pore diameter of the above surface layer is further preferably 0.02 $\mu$m and especially preferably 0.05 $\mu$m. On the other hand, an upper limit value is further preferably 1 um and especially preferably 0.3 $\mu$m. When the average pore diameter of the above surface layer is in the above range, the resin solution membrane having a uniform thickness is formed on the above surface layer. When the average pore diameter of the surface layer of the porous substrate is smaller than 0.01 $\mu$m, there is the fear that a pressure loss heightens in a case where a product including the carbon membrane formed on the surface layer of the porous substrate is used in pervaporation separation or the like. On the other hand, when the average pore diameter is larger than 10 $\mu$m, there is the fear that the strength of the porous substrate deteriorates. The average pore diameter of the surface layer of the porous substrate is a value measured by Perm Porosimeter.

An average pore diameter of the substrate main body can be larger than the average pore diameter of the surface layer of the porous substrate.

A porosity of the porous substrate is preferably from 30 to 70%. A lower limit value of the porosity of the porous substrate is further preferably 35% and especially preferably 40%. On the other hand, an upper limit value is further preferably 65% and especially preferably 60%. When the porosity of the porous substrate is smaller than 30%, there is the fear that the permeation amount of the separation object component which permeates the carbon membrane decreases in a case where a product including the carbon membrane formed on the porous substrate is used in pervaporation separation or the like. On the other hand, when the porosity is larger than 70%, there is the fear that the strength of the porous substrate deteriorates. The porosity of the porous substrate is a value measured by Archimedes method.

There is not any special restriction on a size of the porous substrate, and the size can suitably be selected from such a range that the strength required for the supporter is satisfied and a permeability of the separation object component is not impaired, in accordance with a purpose.

As a method of forming the resin solution membrane on the substrate, a heretofore known method such as a spin coating method or a dipping method can be employed.

The resin solution membrane can be formed by applying, for example, "a phenol resin solution containing the phenol resin" to the substrate. An example of the phenol resin solution is a solution in which powder of the phenol resin is dissolved in an organic solvent such as N-methyl-2-pyrrolidone or ethanol. There is not any special restriction on a concentration of the phenol resin in the phenol resin solution, and the concentration can be, for example, from 1 to 20 mass%. With such a concentration, the phenol resin solution can easily be applied.

[3] Carbon Membrane Filter:

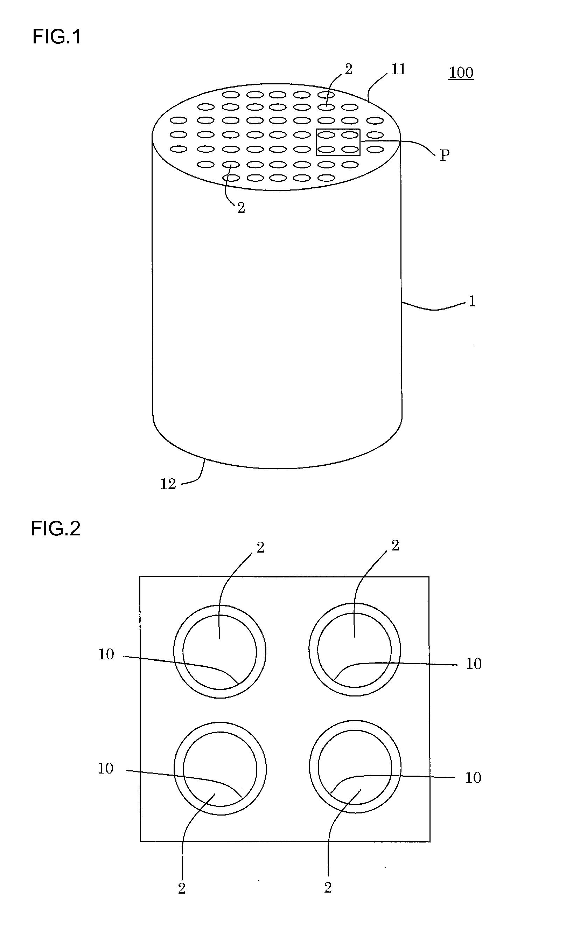

An example of one embodiment of the carbon membrane filter of the present invention is a carbon membrane filter 100 shown in Fig. 1. The carbon membrane filter 100 includes a tubular porous substrate 1 in which there are formed a plurality of cells 2 which become through channels for a fluid and extend from one end face 11 to the other end face 12, and a carbon membrane 10 (see Fig. 2) formed on each of the surfaces of the cells 2 formed on the porous substrate 1. The carbon membrane 10 is "a carbon membrane in which a phenolic hydroxyl group is 10,000 ppm or less". Fig. 1 is a perspective view schematically showing the one embodiment of the carbon membrane filter of the present invention. Fig. 2 is a plan view schematically showing an enlarged region P of a part of the end face of the carbon membrane filter shown in Fig. 1.

As described above, the carbon membrane filter 100 includes the carbon membrane 10 in which the phenolic hydroxyl group is 10,000 ppm or less. Therefore, even when the carbon membrane filter 100 is exposed to the acidic conditions, the deterioration of the separating function does not easily occur. That is, the carbon membrane filter 100 selectively allows the permeation of the desired specific component even after the exposure to the acidic conditions, and does not easily allow the permeation of the component other than the specific component.

As the carbon membrane 10, the abovementioned carbon membrane of the present invention is usable. Furthermore, as the porous substrate 1, the abovementioned porous substrate is usable.

The carbon membrane filter 100 can be manufactured as follows. First, "the phenol resin solution containing the phenol resin" is applied to the surfaces of the cells 2 of the substrate (the porous substrate) 1 which is porous, to form the resin solution membrane made of the phenol resin solution. Next, the porous substrate 1 on which this resin solution membrane is formed is dried. Next, the porous substrate 1 having the dried resin solution membrane (i.e., the resin membrane) is heated at 600 to 900°C in a vacuum or at 650 to 900°C in a nitrogen atmosphere to carbonize the above resin membrane, thereby preparing the carbon membrane filter 100 in which the carbon membrane 10 is formed on the porous substrate 1. As described above, the carbon membrane filter 100 can be manufactured. A heating time to carbonize the above resin membrane is preferably from one to 20 hours.

An example of a method for applying the phenol resin solution to the surfaces of the cells 2 of the porous substrate 1 is a dipping method. As "the phenol resin solution containing the phenol resin", a solution similar to the abovementioned "phenol resin solution containing the phenol resin" is usable.

As drying conditions of the porous substrate 1 on which the resin solution membrane is formed, conditions similar to those of the drying step in the method for manufacturing the abovementioned carbon membrane of the present invention can be employed.

As the drying of the porous substrate 1 on which the resin solution membrane is formed, through-circulation drying is preferable. The reason is that evaporation of the solvent (e.g., N-methyl-2-pyrrolidone) can be promoted from the surface of the resin solution membrane which comes in contact with a through circulation gas (hot air) and the phenol resin can be densified on the surface of the resin solution membrane. The phenol resin is densified on the surface of the resin solution membrane, so that it is possible to prepare a uniform and dense carbon membrane.

As heating conditions of the porous substrate having the dried resin solution membrane (i.e., heating conditions when the resin membrane is carbonized), conditions similar to "the heating conditions of the resin membrane" in the abovementioned method for manufacturing the carbon membrane of the present invention can be employed.

Examples

Hereinafter, the present invention will specifically be described on the basis of examples, but the present invention is not limited to these examples.

(Example 1)

First, alumina particles (an average particle diameter of 50 $\mu$m and an average pore diameter of 12 $\mu$m), water, a dispersant and a thickener were mixed and kneaded to prepare a kneaded material. The prepared kneaded material was formed into a monolithic shape, dried, and fired. As described above, there was prepared a porous substrate of the monolithic shape (a monolithic substrate) in which a plurality of cells were formed. Next, by a filtration membrane forming method, alumina particles (an average particle diameter of 3 $\mu$m) were deposited on the surfaces of the cells of this monolithic substrate, and fired. As described, there was obtained a porous intermediate body in which a porous intermediate layer was formed on each of the surfaces of the cells of the monolithic substrate. The intermediate layer of this porous intermediate body had a thickness of 200 $\mu$m and an average pore diameter of 0.6 $\mu$m. Next, by the filtration membrane forming method, titania particles (an average particle diameter of 0.3 $\mu$m) were further deposited on the intermediate layer of this porous intermediate body, and fired. As described above, a porous surface layer was formed on the intermediate layer of the porous intermediate body. What was obtained was the porous substrate. The surface layer of this porous substrate had a thickness of 30 $\mu$m and an average pore diameter of 0.1 $\mu$m.

Next, by a dipping method, a phenol resin solution was applied onto the surface layer of this porous substrate to form a resin solution membrane. Next, the porous substrate on which the resin solution membrane was formed was heated at 200°C in the air atmosphere to dry the resin solution membrane. Next, heating was performed at 600°C (a carbonizing temperature) in a vacuum atmosphere (in the vacuum) as a carbonizing atmosphere for five hours to carbonize "the dried resin solution membrane" (i.e., the resin membrane). As described above, a carbon membrane filter having a carbon membrane with a membrane thickness of 1 $\mu$m was prepared. Additionally, as the phenol resin solution, N-methyl-2-pyrrolidone was used as a solvent, and the phenol resin (trade name "BELLPEARL S899" manufactured by AIR WATER INC.) diluted with this solvent to 10 mass% was used.

[Concentration of Phenolic Hydroxyl Group]:

Amounts of a carboxyl group, a lactone group and a phenolic hydroxyl group present in the surface of the carbon membrane were determined by a method of Boehm et al. (reference document: Carbon, 40, p. 145 to 149, 2002). Specifically, a part of the carbon membrane of the carbon membrane filter prepared by the above method was shaved off, and carbon membrane powder was sampled. This carbon membrane powder was added by the same amount to an aqueous solution of 0.1 mol/L of $NaHCO_3$, an aqueous solution of 0.1 mol/L of $Na_2HCO_3$, and an aqueous solution of 0.1 mol/L of NaOH, respectively, and shaken at 25°C for four days. Afterward, a supernatant liquid of each aqueous solution was sampled, and each supernatant liquid was neutralized and titrated with 0.1 mol/L of HCl. It is considered

that NaHCO$_3$ causes a neutralizing reaction only with the carboxyl group, Na$_2$HCO$_3$ causes a neutralizing reaction with the carboxyl group and the lactone group, and NaOH causes a neutralizing reaction with all of the above three types of functional groups. Therefore, a change of the concentration of each of the above functional groups before and after the addition of the carbon membrane powder in these aqueous solutions was obtained by the neutralization titration, to calculate an amount of each functional group in each aqueous solution. It is to be noted that when the carbon membrane powder is shaved off from the carbon membrane filter, ceramic constituting the substrate is mixed into the carbon membrane powder. Therefore, "an actual mass of the carbon membrane (a mass obtained by subtracting a mass of the above 'ceramic constituting the substrate' which was mixed into the carbon membrane powder)" was obtained from a difference between the mass before a heat treatment of this carbon membrane powder at 1000°C in the air and the mass after the above heat treatment. The concentration of the phenolic hydroxyl group in the carbon membrane was calculated from the amount of the phenolic hydroxyl group in the carbon membrane powder which was calculated by the above method and the mass of the carbon membrane (the actual mass of the carbon membrane).

In Table 1, "a phenol resin A" of a column of "a raw material resin of the carbon membrane" indicates trade name "BELLPEARL S899" manufactured by AIR WATER INC. "A phenol resin B" indicates trade name "SUMILITE RESIN 53056" manufactured by SUMITOMO BAKELITE CO., LTD. "A polyimide resin" indicates trade name "U-Varnish A" manufactured by Ube Industries, Ltd.

[Table 1]

| | Raw material resin of carbon membrane | Carbonizing atmosphere | Carbonizing temp. (°C) | Concentration of phenolic hydroxyl group (ppm) | Membrane thickness of carbon membrane ($\mu$m) | Initial separation coefficient $\alpha 1$ | Initial permeation flow rate (kg/m$^2$h) | Separation coefficient $\alpha 2$ after immersion | Permeation flow rate after immersion (kg/m$^2$h) | $\alpha 2/\alpha 1$ | Change of separation coefficient |
|---|---|---|---|---|---|---|---|---|---|---|---|
| Example 1 | Phenol resin A | Vacuum | 600 | 10000 | 5 | 83 | 1.5 | 83 | 1.5 | 1.00 | Suitable |
| Example 2 | Phenol resin A | Vacuum | 700 | 6200 | 0.1 | 186 | 1.5 | 186 | 1.5 | 1.00 | Suitable |
| Example 3 | Phenol resin A | Vacuum | 800 | 2600 | 0.1 | 507 | 1.2 | 507 | 1.2 | 1.00 | Suitable |
| Example 4 | Phenol resin A | Vacuum | 900 | 500 | 1 | 1085 | 0.9 | 1085 | 0.9 | 1.00 | Suitable |
| Example 5 | Phenol resin A | Nitrogen | 650 | 9700 | 1 | 126 | 1.6 | 125 | 1.6 | 0.99 | Suitable |
| Example 6 | Phenol resin A | Nitrogen | 700 | 7100 | 1 | 153 | 1.4 | 152 | 1.4 | 0.99 | Suitable |
| Example 7 | Phenol resin A | Nitrogen | 800 | 3500 | 1 | 360 | 1.0 | 357 | 1.0 | 0.99 | Suitable |
| Example 8 | Phenol resin A | Nitrogen | 900 | 800 | 0.1 | 725 | 0.8 | 723 | 0.8 | 1.00 | Suitable |
| Example 9 | Phenol resin B | Vacuum | 650 | 9300 | 1 | 115 | 1.1 | 112 | 1.1 | 0.97 | Suitable |
| Example 10 | Phenol resin B | Vacuum | 700 | 6600 | 1 | 131 | 1.0 | 130 | 1.0 | 0.99 | Suitable |
| Example 11 | Phenol resin B | Vacuum | 800 | 3000 | 1 | 182 | 0.8 | 182 | 0.8 | 1.00 | Suitable |
| Example 12 | Phenol resin B | Vacuum | 900 | 700 | 0.1 | 254 | 0.6 | 254 | 0.6 | 1.00 | Suitable |
| Example 13 | Phenol resin B | Nitrogen | 700 | 7500 | 0.1 | 126 | 1.0 | 124 | 1.0 | 0.98 | Suitable |

(continued)

| | Raw material resin of carbon membrane | Carbonizing atmosphere | Carbonizing temp. (°C) | Concentration of phenolic hydroxyl group (ppm) | Membrane thickness of carbon membrane ($\mu$m) | Initial separation coefficient $\alpha 1$ | Initial permeation flow rate (kg/m$^2$h) | Separation coefficient $\alpha 2$ after immersion | Permeation flow rate after immersion (kg/m$^2$h) | $\alpha 2/\alpha 1$ | Change of separation coefficient |
|---|---|---|---|---|---|---|---|---|---|---|---|
| Example 14 | Phenol resin B | Nitrogen | 800 | 3900 | 1 | 166 | 0.8 | 165 | 0.8 | 0.99 | Suitable |
| Example 15 | Phenol resin B | Nitrogen | 900 | 1000 | 1 | 223 | 0.6 | 223 | 0.6 | 1.00 | Suitable |
| Comparative Example 1 | Polyimide resin | Vacuum | 500 | 48000 | 5 | 16 | 1.2 | 2 | 1.5 | 0.13 | Defective |
| Comparative Example 2 | Polyimide resin | Vacuum | 600 | 34000 | 1 | 68 | 1.8 | 9 | 2.0 | 0.13 | Defective |
| Comparative Example 3 | Polyimide resin | Vacuum | 700 | 23000 | 1 | 165 | 1.7 | 11 | 2.0 | 0.07 | Defective |
| Comparative Example 4 | Polyimide resin | Vacuum | 800 | 16000 | 1 | 347 | 1.2 | 18 | 1.6 | 0.05 | Defective |
| Comparative Example 5 | Polyimide resin | Vacuum | 900 | 12000 | 0.1 | 862 | 0.7 | 56 | 0.9 | 0.06 | Defective |
| Comparative Example 6 | Polyimide resin | Nitrogen | 800 | 18000 | 0.1 | 318 | 1.1 | 24 | 1.4 | 0.08 | Defective |
| Comparative Example 7 | Phenol resin A | Nitrogen | 500 | 14000 | 1 | 32 | 1.0 | 3 | 1.3 | 0.09 | Defective |
| Comparative Example 8 | Phenol resin A | Vacuum | 550 | 15000 | 1 | 12 | 1.2 | 5 | 1.3 | 0.42 | Defective |
| Comparative Example 9 | Phenol resin A | Nitrogen | 600 | 11000 | 1 | 58 | 1.4 | 13 | 1.5 | 0.22 | Defective |
| Comparative Example 10 | Phenol resin B | Vacuum | 550 | 17000 | 1 | 21 | 1.3 | 4 | 1.4 | 0.19 | Defective |
| Comparative Example 11 | Phenol resin B | Nitrogen | 600 | 11000 | 1 | 112 | 1.1 | 46 | 1.3 | 0.41 | Defective |

[Separation Coefficient]:

First, a separation coefficient of the prepared carbon membrane filter (hereinafter described as "an initial separation coefficient $\alpha 1$" sometimes) is measured. Next, this carbon membrane filter is treated by an acid (the acid treatment). Specifically, the filter is immersed into "a mixed liquid of water and ethanol (50 mass%:50 mass%)" at 80°C for three hours, and then immersed into an aqueous solution of 10% sulfuric acid (pH 1) at 80°C for 100 hours. Afterward, the separation coefficient (hereinafter described as "a separation coefficient $\alpha 2$ after the immersion") of the carbon membrane filter treated by the acid is measured. The measurement of the separation coefficient is performed by a pervaporation separation test. In the pervaporation separation test, a mixed liquid (a supply liquid) of water/ethanol = 10/90 (a mass ratio) is used. As test conditions, a temperature of the supply liquid is 70°C, and a pressure of a permeation side is 6.7 kPa. The separation coefficient is calculated by the following Equation 1. "The pressure of the permeation side" is a pressure of a space into which water is discharged. In the above pervaporation separation test, when the supply liquid is supplied into the cells of the carbon membrane filter, the water is separated from the supply liquid by the carbon membrane. That is, the water in the supply liquid permeates the carbon membrane and is discharged as permeated vapor from a side surface of the carbon membrane filter. The discharged permeated vapor is cooled and trapped as a permeated liquid. Table 1 shows the measurement results of the initial separation coefficient $\alpha 1$ and the separation coefficient $\alpha 2$ after the immersion.

$$\text{Equation 1: the separation coefficient} = \text{(the}$$
$$\text{concentration of water in the permeated liquid/the}$$
$$\text{concentration of ethanol in the permeated liquid)/(the}$$
$$\text{concentration of water in the supply liquid/the}$$
$$\text{concentration of ethanol in the supply liquid)}$$

Next, "a change of the separation coefficient" was evaluated from the initial separation coefficient $\alpha 1$ and the separation coefficient $\alpha 2$ after the immersion. "The change of the separation coefficient" was evaluated by a value (described as "$\alpha 2/\alpha 1$" in Table 1) calculated by "the separation coefficient $\alpha 2$ after the immersion/the initial separation coefficient $\alpha 1$". For evaluation standards, a case where the value calculated by "the separation coefficient $\alpha 2$ after the immersion/the initial separation coefficient $\alpha 1$" is 0.95 or more is "suitable". A case where the value calculated by "the separation coefficient $\alpha 2$ after the immersion/the initial separation coefficient $\alpha 1$" is smaller than 0.95 is "defective".

[Permeation Flux (Flux)]:

When the separation coefficient of the carbon membrane filter was measured, measurement of a permeation flux (Flux) was also performed. "The permeation flux of the carbon membrane filter before the acid treatment" and "the permeation flux of the carbon membrane filter after the acid treatment" were measured. Hereinafter, "the permeation flux of the carbon membrane filter before the acid treatment" will be described as "an initial permeation flux" sometimes. Hereinafter, "the permeation flux of the carbon membrane filter after the acid treatment" will be described as "the permeation flux after the immersion" sometimes.

The permeation flux (Flux) is calculated by the following Equation 2. In Equation 2, "an amount (kg) of the trapped permeated liquid" is an amount (kg) of a liquid trapped by cooling, in liquid nitrogen, permeated vapor (mainly water vapor) discharged from a side surface of the carbon membrane filter in the above pervaporation separation test. Table 1 shows the measurement results of "the initial permeation flux (kg/m$^2$h)" and "the permeation flux (kg/m$^2$h) after the immersion".

$$\text{Equation 2: Permeation flux} = \text{the amount (kg) of the}$$
$$\text{trapped permeated liquid/(a sampling time (hour (h))} \times \text{an}$$
$$\text{area (m}^2\text{) of the carbon membrane)}$$

In the carbon membrane filter of the present example, as described above, a phenolic hydroxyl group in the carbon membrane was 10,000 ppm. Therefore, a value calculated by "a separation coefficient $\alpha 2$ after the immersion/an initial separation coefficient $\alpha 1$" in the carbon membrane filter of the present example was 1.00. That is, the lowering of the separation coefficient did not occur even by the acid treatment. As described above, it was possible to confirm that in the carbon membrane filter of the present example, a separating function did not easily deteriorate even after exposure to acidic conditions. That is, it can be confirmed that in the carbon membrane of the carbon membrane filter of the present example, the separating function does not easily deteriorate even after the exposure to the acidic conditions. Additionally, the permeation flux before and after the acid treatment did not change.

(Examples 2 to 15 and Comparative Examples 1 to 11)

The procedures of Example 1 were repeated except that "a raw material resin of a carbon membrane" shown in Table 1 was used and a carbonizing temperature and a carbonizing atmosphere shown in Table 1 were used, to prepare carbon membrane filters. Afterward, as to each of the prepared carbon membrane filters, a separation coefficient was measured and "a change of the separation coefficient" was evaluated in the same manner as in Example 1. Furthermore, a permeation flux was measured. Table 1 shows the results.

As apparent from Table 1, in each of the carbon membrane filters of Examples 1 to 15, the evaluation of "the change of the separation coefficient" was "suitable". According to this evaluation, it was possible to confirm that in each of the carbon membranes of the carbon membrane filters of Examples 1 to 15, the separating function did not easily deteriorate even by the acid treatment. Furthermore, it was possible to confirm that in each of the carbon membranes of the carbon membrane filters of Examples 1 to 15, the separating function did not easily deteriorate even after the exposure to the acidic conditions.

Industrial Applicability

Each of a carbon membrane and a carbon membrane filter of the present invention can be utilized as a filter to selectively separate a specific substance (a gas or a liquid) from a mixture of a plurality of substances (gases or liquids). In a method for manufacturing the carbon membrane of the present invention, it is possible to manufacture a carbon membrane as the filter to selectively separate the specific substance (the gas or the liquid) from the mixture of the plurality of substances (the gases or the liquids).

Description of Reference Numerals

1: porous substrate, 2: cell, 10: carbon membrane, 11: one end face, 12: the other end face, 100: carbon membrane filter, and P: region.

**Claims**

1. A carbon membrane in which a phenolic hydroxyl group is 10,000 ppm or less.

2. The carbon membrane according to claim 1, wherein a membrane thickness is from 0.1 to 5 $\mu$m.

3. A method for manufacturing a carbon membrane, comprising:

   a drying step of drying a resin solution membrane including a phenol resin formed on a substrate; and
   a carbon membrane preparing step of heating the dried resin solution membrane at 600 to 900°C in a vacuum or at 650 to 900°C in a nitrogen atmosphere to carbonize the membrane, thereby obtaining the carbon membrane in which a phenolic hydroxyl group is 10,000 ppm or less.

4. The method for manufacturing the carbon membrane according to claim 3,
   wherein the drying step is a step of drying the resin solution membrane at a temperature of 200 to 350°C in the air atmosphere.

5. The method for manufacturing the carbon membrane according to claim 3 or 4,
   wherein the substrate is a tubular porous substrate in which there are formed a plurality of cells which become through channels for a fluid and extend from one end face to the other end face, and
   the drying step is a step of drying the resin solution membrane formed on each of the surfaces of the cells of the porous substrate.

6. A carbon membrane filter comprising:

a tubular porous substrate in which there are formed a plurality of cells which become through channels for a fluid and extend from one end face to the other end face; and
the carbon membrane according to claim 1 or 2, which is formed on each of the surfaces of the cells formed on the porous substrate.

FIG.1

FIG.2

## INTERNATIONAL SEARCH REPORT

| | International application No. |
|---|---|
| | PCT/JP2013/052483 |

A. CLASSIFICATION OF SUBJECT MATTER
*B01D71/02*(2006.01)i, *B01D69/04*(2006.01)i, *B01D69/12*(2006.01)i, *C01B31/02*
(2006.01)i

According to International Patent Classification (IPC) or to both national classification and IPC

B. FIELDS SEARCHED

Minimum documentation searched (classification system followed by classification symbols)
B01D71/02, B01D69/04, B01D69/12, C01B31/02

Documentation searched other than minimum documentation to the extent that such documents are included in the fields searched
Jitsuyo Shinan Koho          1922-1996     Jitsuyo Shinan Toroku Koho    1996-2013
Kokai Jitsuyo Shinan Koho   1971-2013     Toroku Jitsuyo Shinan Koho    1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2011/018919 A1  (NGK Insulators, Ltd.), 17 February 2011 (17.02.2011), paragraphs [0047] to [0050], [0066] to [0068], [0070] to [0073], [0085]; claims 1 to 5 (Family: none) | 1-6 |
| A | JP 2000-237562 A  (Kanebo, Ltd.), 05 September 2000 (05.09.2000), claims 1, 5, 7; paragraphs [0001], [0011], [0023], [0048] to [0050] (Family: none) | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 April, 2013 (25.04.13) | 14 May, 2013 (14.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/052483 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | WO 2009/150903 A1 (NGK Insulators, Ltd.), 17 December 2009 (17.12.2009), paragraphs [0001], [0033], [0039] to [0043], [0054] & EP 2298437 A1     & WO 2009/150903 A1 & CA 2691305 A | 1-6 |
| A | JP 10-052629 A (Kanebo, Ltd.), 24 February 1998 (24.02.1998), claims 1, 2, 5; paragraphs [0001], [0039] to [0041]; table 1 (Family: none) | 1-6 |
| A | WO 2011/118469 A1 (NGK Insulators, Ltd.), 29 September 2011 (29.09.2011), paragraphs [0001], [0021] to [0023], [0037] to [0043], [0045], [0046] & US 2013/0015134 A1    & EP 2554246 A & WO 2011/118469 A     & CA 2794353 A | 1-6 |
| A | WO 2011/004660 A1 (NGK Insulators, Ltd.), 13 January 2011 (13.01.2011), paragraphs [0001], [0033], [0046] to [0048], [0067] & US 2012/0091056 A1    & WO 2011/004660 A1 | 1-6 |
| E,A | WO 2013/042262 A1 (NGK Insulators, Ltd.), 28 March 2013 (28.03.2013), paragraphs [0001], [0021], [0022], [0025] to [0026], [0029], [0030], [0035] to [0040], [0045], [0046]; claim 1 (Family: none) | 1-6 |

Form PCT/ISA/210 (continuation of second sheet) (July 2009)

## REFERENCES CITED IN THE DESCRIPTION

**Patent documents cited in the description**

- JP 3647985 B
- JP 2000237562 A
- WO 2009150903 A
- WO 2011118469 A

**Non-patent literature cited in the description**

- **BOEHM et al.** *Carbon,* 2002, vol. 40, 145-149